# EUROPÄISCHE PATENTSCHRIFT

(11) **EP 2 296 967 B1**
(45) Veröffentlichungstag und Bekanntmachung des Hinweises auf die Patenterteilung: **13.03.2013**
(21) Anmeldenummer: 09765591.4
(22) Anmeldetag: 15.06.2009
(51) Int. Cl.: B64D 11/00, B64D 13/00, H01R 13/631

(54) **SCHNITTSTELLENELEMENT, FLUGZEUGINNENAUSTATTUNGSBAUTEIL UND VERFAHREN ZUR MONTAGE EINES FLUGZEUGINNENAUSTATTUNGSBAUTEILS**
INTERSECTING ELEMENT, AIRCRAFT INTERIOR EQUIPMENT COMPONENT AND METHOD FOR INSTALLING AN AIRCRAFT INTERIOR EQUIPMENT COMPONENT
ÉLÉMENT INTERFACE, ÉLÉMENT D'ÉQUIPEMENT INTÉRIEUR D'AVION ET PROCÉDÉ DE MONTAGE D'UN ÉLÉMENT D'ÉQUIPEMENT INTÉRIEUR D'AVION

(30) Priorität: 20.06.2008 DE 102008029468; 20.06.2008 US 74172
(43) Veröffentlichungstag der Anmeldung: 23.03.2011
(73) Patentinhaber: Airbus Operations GmbH, 21129 Hamburg (DE)
(72) Erfinder: PLADECK, Gerrit, 86899 Landsberg am Lech (DE); KOWALSKI, Remigiusz, 88400 Biberach (DE); STRÖBELE, Dietmar, 88480 Achstetten (DE); STÜTZER, Jörg, 88483 Burgrieden (DE); KNÖPFLE, Stefan, 86836 Untermeitingen (DE)
(74) Vertreter: Schicker, Silvia
(86) Internationale Anmeldenummer: PCT/EP2009/004278
(87) Internationale Veröffentlichungsnummer: WO 2009/153011

(56) Entgegenhaltungen:
- EP-A2- 0 794 594
- EP-A2- 0 901 197
- DE-A1-102006 016 509
- US-A- 3 227 475
- US-B2- 7 258 559

## Beschreibung

Die Erfindung betrifft ein Schnittstellenelement zur Verbindung von an einem Flugzeuginnenausstattungsbauteil vorgesehenen ersten Abschnitten en einer Mehrzahl von Flugzeugversorgungssystemen mit entsprechenden zweiten Abschnitten der Flugzeugversorgungssystems sowie ein mit einem derartigen Schnittstellenelement versehenes Flugzeuginnenausstattungsbauteil. Ferner betrifft die Erfindung ein Verfahren zur Montage eines Flugzeuginnenausstattungsbauteils in einem Flugzeug.

Beispiele des Stands der Technik sind durch US 3227475, US 7258559, DE 10 2006016509 gegeben.

Bei der Montage von Innenausstattungsbauteilen, wie z.B. Seiten-, Decken- und Türverkleidungspaneelen, Gepäckfächern oder Galleykomponenten in einem Flugzeug ist es derzeit üblich, die Innenausstattungsbauteile an ihrer gewünschten Position im Flugzeug installieren und erst anschließend eine Verbindung jeweiliger bauteilseitiger Anschlüsse mit den verschiedenen Flugzeugversorgungssystemen herzustellen. Beispielsweise wird bei der Montage eines Gepäckfachs in einem Flugzeug zunächst das Gepäckfach an der Flugzeugstruktur befestigt. Anschließend werden in einem separaten Arbeitsschritt die jeweiligen an dem Gepäckfach vorgesehenen Anschlüsse mit dem elektrischen Versorgungssystem, dem Sauerstoffversorgungssystem und dem Luftversorgungssystem des Flugzeugs verbunden. Die Endmontage der Flugzeuginnenausstattungsbauteile ist daher sehr zeitaufwendig und folglich kostenintensiv. Darüber hinaus müssen die Innenausstattungsbauteile so gestaltet und im Flugzeug positioniert werden, dass ausreichend große Zugangsbereiche zu den Verbindungsstellen zwischen den bauteilseitigen Anschlüssen und den Flugzeugversorgungssystemen frei bleiben. Diese Zugangsbereiche können nicht oder nur eingeschränkt als Einbauraum für andere Flugzeugkomponenten genutzt werden.

Der Erfindung liegt die Aufgabe zugrunde, ein Schnittstellenelement zur Verbindung von an einem Flugzeuginnenausstattungsbautell vorgesehenen ersten Abschnitten einer Mehrzahl von Flugzeugversorgungssystemen mit entsprechenden zweiten Abschnitten der Flugzeugversorgungssysteme, ein mit einem derartigen Schnittstellenelement versehenes Flugzeuginnenausstattungsbauteil sowie ein Verfahren zur Montage eines Flugzeuginnenausstattungsbauteils in einem Flugzeug bereitzustellen, die eine einfache und schnelle Montage des Innenausstattungsbauteils in dem Flugzeug ermöglichen.

Diese Aufgabe wird durch ein Schnittstellenelement mit den Merkmalen des Anspruchs 1, ein Flugzeuginnenausstattungsbauteil mit den Merkmalen des Anspruchs 9 sowie ein Verfahren zur Montage eines Flugzeuginnenausstattungsbauteils in einem Flugzeug mit den Merkmalen des Anspruchs 10 gelöst.

Ein erfindungsgemäßes Schnittstellenelement umfasst eine an dem Flugzeuginnenausstattungsbauteil befestigbare Trägerstruktur. Das Flugzeugversorgungssystem kann beispielsweise ein Luftversorgungssystem, ein elektrisches Versorgungssystem, ein Wasserversorgungssystem, ein Sauerstoffversorgungssystem oder ein beliebiges anderes an Bord des Flugzeugs vorgesehenes Versorgungssystem sein. Wesentlich ist lediglich, dass das Versorgungssystem einen innenausstattungsbauteilseitigen ersten Abschnitt umfasst, der bei der Montage des Innenausstattungsbauteils in dem Flugzeug mit einem zweiten Abschnitt verbunden werden muss. Der zweite Abschnitt des Flugzeugversorgungssystems kann beispielsweise ein flugzeugseitiger zentraler Abschnitt des Versorgungssystems sein. Alternativ dazu kann der zweite Abschnitt des Flugzeugversorgungssystems jedoch auch ein einem anderen Innenausstattungsbauteil zugeordneter Flugzeugversorgungssystemabschnitt sein.

Das erfindungsgemäße Schnittstellenelement umfasst ferner ein Anschlusselement, das mit dem an dem Flugzeuginnenausstattungsbauteil vorgesehenen ersten Abschnitt des Flugzeugversorgungssystems verbindbar ist. Im an dem Flugzeuginnenausstattungsbauteil montierten Zustand des Schnittstellenelements bildet somit das Anschlusselement die Schnittstelle zwischen dem bauteilseitigen ersten Abschnitt des Flugzeugversorgungssystems und dem damit zu verbindenden zweiten Abschnitt des Flugzeugversorgungssystems.

Das Anschlusselement ist über eine Lagereinrichtung auf der Trägerstruktur gelagert. Die Lagereinrichtung umfasst mindestens ein elastisches Lagerelement, das eine in alle drei Raumrichtungen bewegliche Lagerung des Anschlusselements ermöglicht. Mit anderen Worten, die Lagereinrichtung des erfindungsgemäßen Schnittstellenelements ist so gestaltet, dass das Anschlusselement in alle drei Raumrichtungen beweglich auf der Trägerstruktur gelagert ist.

Mit Hilfe des erfindungsgemäßen Schnittstellenelements wird eine Plug & Play-Verbindung zwischen dem innenausstattungsbauteilseitigen ersten Abschnitt des Flugzeugversorgungssystems und dem zweiten Abschnitt des Flugzeugversorgungssystems hergestellt. Es ist daher nicht länger erforderlich, das Innenausstattungsbauteil bei der Montage zunächst an der Flugzeugstruktur zu befestigen und anschließend erst in einem zweiten separaten Arbeitsschritt den innenausstattungsbauteilseitigen ersten Abschnitt des Flugzeugversorgungssystems mit dem zweiten Abschnitt des Flugzeugversorgungssystems zu verbinden. Stattdessen ermöglicht das Schnittstellenelement die Montage des Innenausstattungsbauteils und den Anschluss des innenausstattungsbauteilseitigen ersten Abschnitts des Flugzeugversorgungssystems an den zweiten Abschnitt des Flugzeugversorgungssystems in einem Arbeitsgang. Design- und Montagetoleranzen werden dabei in vorteilhafter Weise durch die in alle drei Raumrichtungen bewegliche Lagerung des Anschlusselements ausgeglichen, die beim Verbinden des Anschlusselements mit dem zweiten Abschnitt des Flugzeugversorgungssystems für eine Selbstzentrierung des Anschlusselements sorgt.

Durch den Einsatz des erfindungsgemäßen Schnittstellenelements kann somit die Montage eines mit dem erfindungsgemäßen Schnittstellenelement ausgestatteten Innenausstattungsbauteils in einem Flugzeug beträchtlich vereinfacht und beschleunigt werden. Darüber hinaus ist es bei der Positionierung des Innenausstattungsbauteils im Flugzeug nicht länger erforderlich, Zugangsbereiche zu den bauteilseitigen Anschlüssen des ersten Abschnitts des Flugzeugversorgungssystems freizulassen, um diese nach der Befestigung des Innenausstattungsbauteils an der Flugzeugstruktur mit dem zweiten Abschnitt des Flugzeugversorgungssystems verbinden zu können. Diese Zugangsbereiche können daher bei der Verwendung des erfindungsgemäßen Schnittstellenelements in vorteilhafter Weise eingespart und beispielsweise als Einbauraum für andere Flugzeugkomponenten genutzt werden.

Das Anschlusselement des erfindungsgemäßen Schnittstellenelements kann ein Luftversorgungssystemanschlusselement, ein elektrisches Anschlusselement, ein Wasserversorgungssystemanschlusselement und/oder ein Sauerstoffversorgungssystemanschlusselement sein. Wesentlich ist lediglich, dass das Anschlusselement eine ordnungsgemäße Verbindung zwischen dem innenausstattungsbauteilseitigen ersten Abschnitt des Flugzeugversorgungssystems mit dem zweiten Abschnitt des Flugzeugversorgungssystems herstellen kann. Vorzugsweise weist der zweite Abschnitt des Flugzeugversorgungssystems ein zu dem Anschlusselement komplementäres Anschlusselement auf, um eine besonders einfach und komfortable Verbindung des Anschlusselements mit dem zweiten Abschnitt des Flugzeugversorgungssystems zu ermöglichen.

Grundsätzlich ist das erfindungsgemäße Schnittstellenelement mit mehreren Anschlusselementen versehen. Beispielsweise kann an einem einzigen Schnittstellenelement ein Luftversorgungssystemanschlusselement, ein elektrisches Anschlusselement und ein Sauerstoffversorgungssystemanschlusselement vorgesehen sein. Alternativ oder zusätzlich dazu kann ein Anschlusselement auch so gestaltet sein, dass es die Verbindung der ersten Abschnitte mehrerer Flugzeugversorgungssysteme mit den entsprechenden zweiten Abschnitten dieser Flugzeugversorgungssysteme ermöglicht. Ein erfindungsgemäßes Schnittstellenelement, das mehrere Anschlusselemente oder ein Anschlusselement umfasst, das zur Verbindung der ersten Abschnitte mehrerer Flugzeugversorgungssysteme mit den entsprechenden zweiten Abschnitten dieser Flugzeugversorgungssysteme geeignet ist, ist insbesondere zur Verwendung mit einem Flugzeuginnenausstattungsbauteil geeignet, das mit mehreren Flugzeugversorgungssystemen in Verbindung steht. Das Schnittstellenelement ermöglicht dann eine besonders einfache Montage dieses Innenausstattungsbauteils.

An dem Anschlusselement und/oder an der Lagereinrichtung des erfindungsgemäßen Schnittstellenelements kann eine Positioniereinrichtung ausgebildet sein, die dazu eingerichtet ist, beim Verbinden des ersten Abschnitts des Flugzeugversorgungssystems mit dem zweiten Abschnitt des Flugzeugversorgungssystems mit einer an dem zweiten Abschnitt des Flugzeugversorgungssystems vorgesehenen komplementären Positioniereinrichtung zusammenzuwirken. Die Positioniereinrichtung ermöglicht bei der Verbindung des innenausstattungsbauteilseitigen ersten Abschnitts des Flugzeugversorgungssystems mit dem zweiten Abschnitt des Flugzeugversorgungssystems eine optimale Ausrichtung des in alle drei Raumrichtungen beweglich gelagerten Anschlusselements relativ zu dem mit dem Anschlusselement zu verbindenden zweiten Abschnitt des Flugzeugversorgungssystems.

An dem Anschlusselement kann eine Verbindungseinrichtung zur Verbindung des Anschlusselements mit dem zweiten Flugzeugversorgungssystem vorgesehen sein. Beispielsweise kann an dem Anschlusselement eine Rasteinrichtung vorgesehen sein, die mit einer an dem zweiten Abschnitt des Flugzeugversorgungssystems vorgesehenen komplementären Rasteinrichtung zusammenwirkt, um das Anschlusselement sicher mit dem zweiten Abschnitt des Flugzeugversorgungssystems zu verbinden.

Die Trägerstruktur des erfindungsgemäßen Schnittstellenelements umfasst eine Platte, die mit einer entsprechenden Anzahl von Aussparungen zur Aufnahme aller Anschlusselemente des erfindungsgemäßen Schnittstellenelements versehen ist. Die Trägerstruktur umfasst ferner mit der Platte verbundene Füße, die dazu vorgesehen sind, die Trägerstruktur mit dem Flugzeuginnenausstattungsbauteil zu verbinden. Wesentlich ist jedoch, dass die Trägerstruktur so geformt ist, dass sie die in alle drei Raumrichtungen bewegliche Lagerung des Anschlusselements erlaubt.

Die Lagereinrichtung des erfindungsgemäßen Schnittstellenelements kann einen Federkorb umfassen, der beispielsweise an einer Oberfläche der Trägerstrukturplatte angebracht ist, die im an einem Innenausstattungsbauteil montierten Zustand des Schnittstellenelements dem Innenausstattungsbauteil zugewandt ist. Beispielsweise kann der Federkorb eine Mehrzahl von Armen umfassen, die mittels geeigneter Befestigungsmittel, wie z.B. Schrauben oder dergleichen an der Platte der Trägerstruktur befestigt sind. Eine in dem Federkorb angeordnete Feder, beispielsweise eine Spiralfeder, kann sich an ihrem ersten Ende an einer mit den Armen des Federkorbs verbundenen Stützeinrichtung abstützen. Die Stützeinrichtung des Federkorbs kann beispielsweise kreisringförmig ausgebildet sein. Ein mit einer derartigen Lagereinrichtung zusammenwirkendes Anschlusselement umfasst vorzugsweise einen radial nach außen ragenden Flansch, der auf der in dem Federkorb angeordneten Feder aufliegt, d.h. von dem zweiten Ende der Feder abgestützt wird.

Eine Lagereinrichtung mit einem Federkorb und einer in dem Federkorb angeordneten Feder ist besonders gut zur in alle drei Raumrichtungen beweglichen Lagerung eines einen runden Querschnitt aufweisenden Anschlusselements geeignet. Die Lagereinrichtung kann daher in besonders vorteilhafter Weise dazu verwendet werden, ein rohrförmiges Luftversorgungssystemanschlusselement eines erfindungsgemäßen Schnittstellenelements in alle drei Raumrichtungen beweglich zu lagern. Darüber hinaus zeichnet sich eine einen Federkorb sowie eine in dem Federkorb angeordnete Feder umfassende Lagereinrichtung durch einen einfachen Aufbau und ein geringes Gewicht aus.

Alternativ dazu kann die Lagereinrichtung jedoch auch ein Gehäuse sowie eine in dem Gehäuse angeordnete und das Anschlusselement tragende Halterung umfassen. Die Halterung kann durch das elastische Lagerelement in alle drei Raumrichtungen beweglich in dem Gehäuse gelagert sein. Mit anderen Worten, bei einer derartig ausgebildeten Lagereinrichtung ist das Anschlusselement nicht unmittelbar selbst in alle drei Raumrichtungen beweglich gelagert, sondern die das Anschlusselement tragende Halterung. Eine derartige Lagereinrichtung eignet sich besonders gut zur Lagerung eines elektrischen Anschlusselements oder eines Anschlusselements, das dazu dient, die ersten Abschnitte mehrerer Flugzeugversorgungssysteme mit den entsprechenden zweiten Abschnitten der Flugzeugversorgungssysteme zu verbinden. Darüber hinaus kann eine derartige Lagereinrichtung auch dazu dienen, mehrere Anschlusselemente in alle drei Raumrichtungen beweglich auf der Trägerstruktur des erfindungsgemäßen Schnittstellenelements zu lagern. Um dies zu realisieren muss lediglich die Halterung entsprechend ausgebildet sein, um die Aufnahme mehrerer Anschlusselemente zu ermöglichen.

Bei einer ein Gehäuse sowie eine in dem Gehäuse angeordnete und das Anschlusselement tragende Halterung umfassenden Lagereinrichtung kann das elastische Lagerelement ein in dem Gehäuse angeordnetes Elastomerelement umfassen. Alternativ oder zusätzlich dazu kann das elastische Lagerelement auch eine Mehrzahl von Federn umfassen, deren erste Enden mit dem Gehäuse und deren zweite Enden mit der das Anschlusselement tragenden Halterung verbunden sind. Da sowohl das in dem Gehäuse angeordnete Elastomerelement als auch die Federn eine in alle drei Raumrichtungen bewegliche Lagerung der Halterung und somit des Anschlusselements in dem Gehäuse der Lagereinrichtung ermöglichen, kann das endgültige Design des elastischen Lagerelements in vorteilhafter Weise an die an die Lagereinrichtung gestellten Anforderungen bezüglich Einbauraum, Gewicht, etc. angepasst werden. Ein vollständig in dem Gehäuse aufgenommenes Elastomerelement ist jedoch besonders gut vor Umgebungseinflüssen geschützt.

Die das Anschlusselement tragende Halterung der Lagereinrichtung kann mindestens eine Aufnahmeeinrichtung zur Aufnahme eines an dem zweiten Abschnitt des Flugzeugversorgungssystems ausgebildeten Vorsprungs umfassen. Die Aufnahmeeinrichtung bildet somit eine Positioniereinrichtung, während der an dem zweiten Abschnitt des Flugzeugversorgungssystems ausgebildete Vorsprung die zu der Positioniereinrichtung der Lagereinrichtung komplementäre Positioniereinrichtung bildet. Die Aufnahmeeinrichtung und/oder der Vorsprung kann/können konisch ausgebildet sein und dadurch bei der Montage eines mit dem erfindungsgemäßen Schnittstellenelement ausgestatteten Flugzeuginnenausstattungsbauteils an seiner Position im Flugzeug eine besonders einfache Ausrichtung des Anschlusselements ermöglichen.

Ein erfindungsgemäßes Flugzeuginnenausstattungsbauteil umfasst ein oben beschriebenes Schnittstellenelement.

Ein erfindungsgemäßes Verfahren zur Montage eines Flugzeuginnenausstattungsbauteils in einem Flugzeug umfasst die Schritte Bereitstellen eines erfindungsgemäßen Flugzeuginnenausstattungsbauteils, Befestigen des Flugzeuginnenausstattungsbauteils an einer Flugzeugstruktur und Verbinden eines an dem Flugzeuginnenausstattungsbauteil vorgesehenen ersten Abschnitts eines Flugzeugversorgungssystems mit einem zweiten Abschnitt des Flugzeugversorgungssystems durch Verbinden des Anschlusselements des Schnittstellenelements mit dem zweiten Abschnitt des Flugzeugversorgungssystems.

Vorzugsweise wirkt bei dem erfindungsgemäßen Montageverfahren beim Verbinden des Anschlusselements des Schnittstellenelements mit dem zweiten Abschnitt des Flugzeugversorgungssystems eine an dem Anschlusselement und/oder an der Lagereinrichtung ausgebildete Positioniereinrichtung mit einer an dem zweiten Abschnitt des Flugzeugversorgungssystems vorgesehenen komplementären Positioniereinrichtung zusammen.

Ferner kann das Anschlusselement mittels einer an dem Anschlusselement vorgesehenen Verbindungseinrichtung mit dem zweiten Abschnitt des Flugzeugversorgungssystems verbunden werden.

Eine bevorzugte Ausführungsform der Erfindung wird nun anhand der beigefügten schematischen Zeichnungen näher erläutert, von denen
- Figur 1: eine dreidimensionale Ansicht eines Schnittstellenelements zur Verbindung von an einem Flugzeuginnenausstattungsbauteil vorgesehenen ersten Abschnitten mehrerer Flugzeugversorgungssysteme mit entsprechenden zweiten Abschnitten der Flugzeugversorgungssysteme zeigt,
- Figuren 2a und 2b: die Verbindung des Schnittstellenelements gemäß Figur 1 mit den entsprechenden zweiten Abschnitten der Flugzeugversorgungssysteme zeigen,
- Figur 3: eine Explosionsansicht einer ersten Lagereinrichtung und eines ersten Anschlusselements des Schnittstellenelements gemäß Figur 1 sowie eines zum Zusammenwirken mit dem ersten Anschlusselement vorgesehenen Teils eines zweiten Abschnitts eines ersten Flugzeugversorgungssystems zeigt,
- Figur 4: eine Explosionsansicht einer zweiten Lagereinrichtung und eines zweiten Anschlusselements eines Schnittstellenelements gemäß Figur 1 sowie eines zum Zusammenwirken mit dem zweiten Anschlusselement vorgesehenen Teils eines zweiten Abschnitts eines zweiten Flugzeugversorgungssystems zeigt und
- Figur 5: ein mit einem Schnittstellenelement gemäß Figur 1 ausgestattetes Flugzeuggepäckfach zeigt.

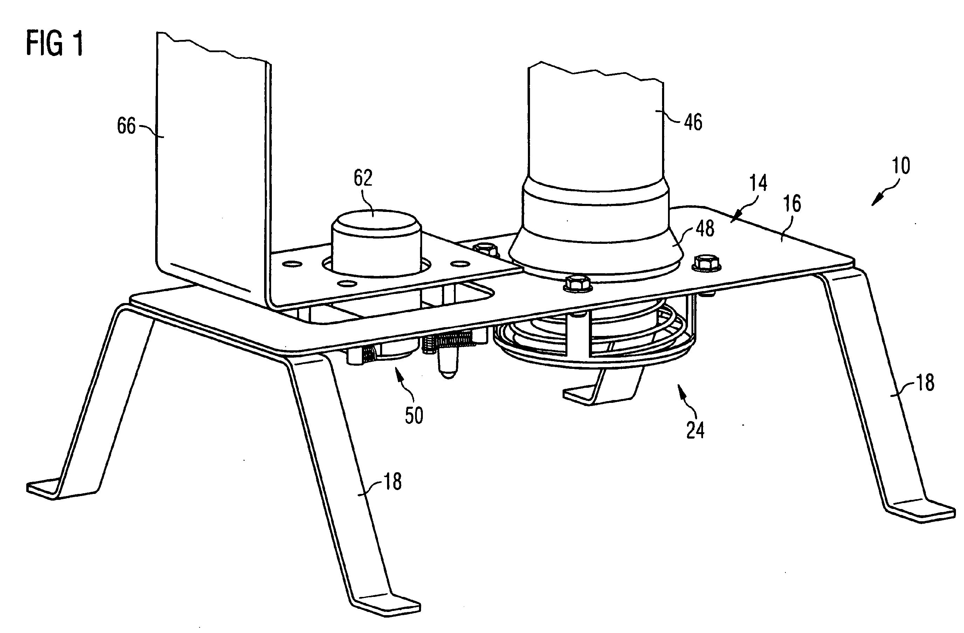

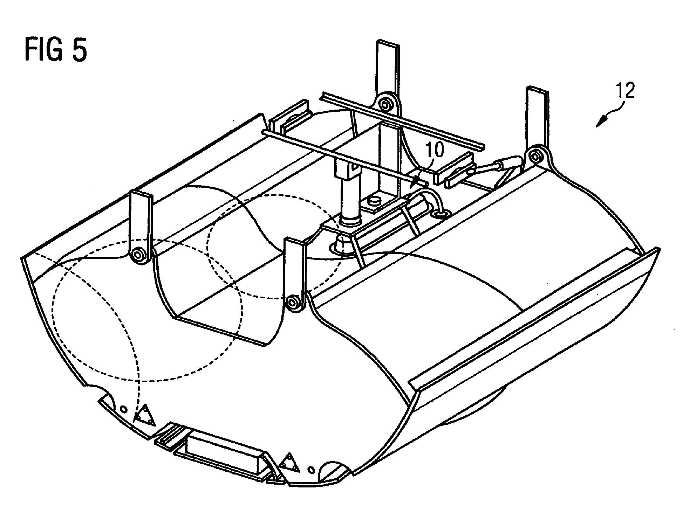

Ein in den Figuren 1 bis 5 gezeigtes Schnittstellenelement 10 dient dazu, in einem Flugzeug eine Verbindung zwischen an einem Flugzeuginnenausstattungsbauteil vorgesehenen ersten Abschnitten mehrerer Flugzeugversorgungssysteme mit entsprechenden zweiten Abschnitten der Flugzeugversorgungssysteme herzustellen. Wie in Figur 5 gezeigt ist, kann ein mit dem Schnittstellenelement 10 auszustattendes Flugzeuginnenausstattungsbauteil beispielsweise ein in der Passagierkabine eines Flugzeugs anzuordnendes Überkopfgepäckfach 12 sein. Das Schnittstellenelement 10 kann jedoch auch mit anderen Flugzeuginnenausstattungsbauteilen, wie z.B. Seiten-, Decken- oder Türverkleidungspaneelen, Galleykomponenten oder ähnlichen Interieurkomponenten eingesetzt werden.

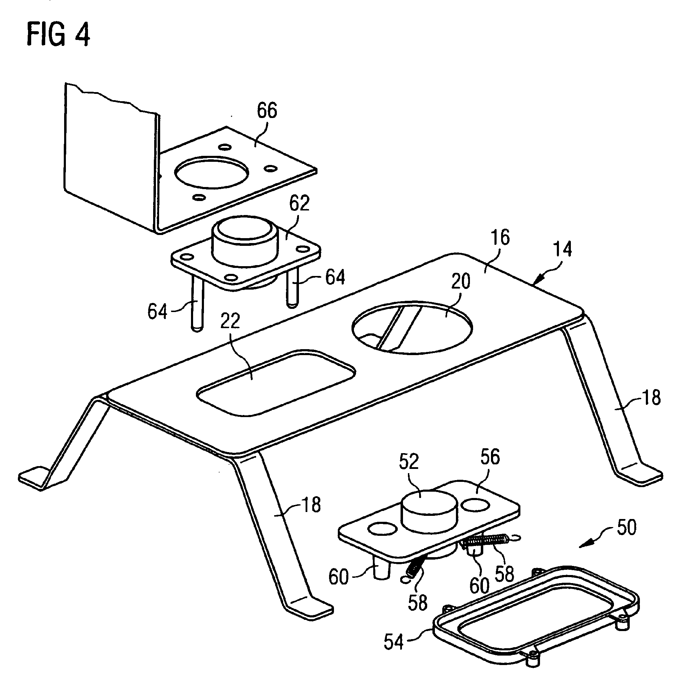

Das Schnittstellenelement 10 umfasst eine Trägerstruktur 14 mit einer Platte 16 sowie die Platte 16 tragenden Füßen 18. Über die Füße 18 ist die Trägerstruktur 14 an dem Flugzeuginnenausstattungsbauteil, wie z.B. dem Gepäckfach 12 befestigbar. Wie insbesondere in Figur 4 zu erkennen ist, ist die Platte 16 der Trägerstruktur 14 mit einer im Wesentlichen kreisförmigen ersten Aussparung 20 sowie einer im Wesentlichen rechteckigen zweiten Aussparung 22 versehen.

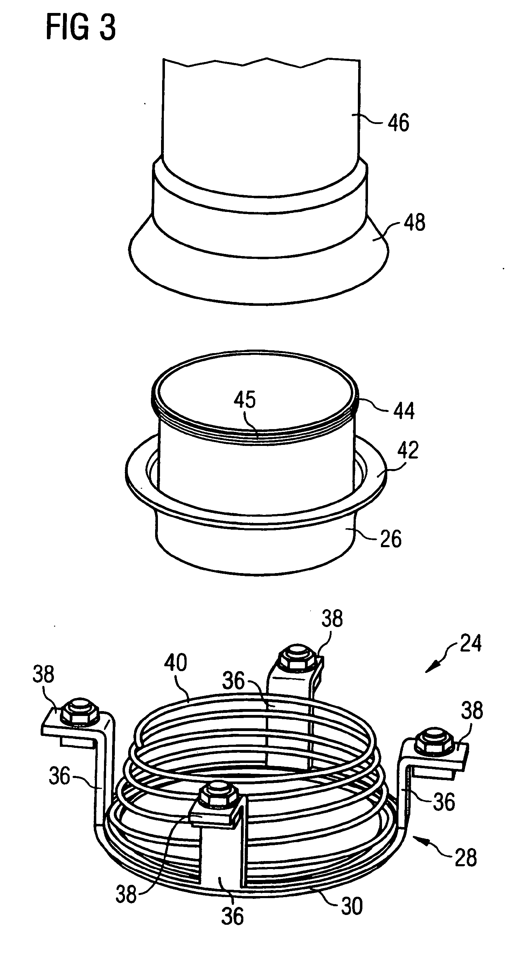

Das Schnittstellenelement 10 umfasst eine erste Lagereinrichtung 24, die dazu dient, ein in Form eines Luftversorgungssystemanschlusselements ausgebildetes erstes Anschlusselement 26 in alle drei Raumrichtungen beweglich auf der Trägerstruktur 14 zu lagern. Wie insbesondere in Figur 3 veranschaulicht ist, umfasst die erste Lagereinrichtung 24 einen Federkorb 28 mit einer kreisringförmigen Stützeinrichtung 30. Von der Stützeinrichtung 30 erstrecken sich in Umfangsrichtung vier Arme 36, die jeweils einen radial nach außen ragenden Flanschabschnitt 38 aufweisen. Über die Flanschabschnitte 38 der Arme 36 ist der Federkorb 28 derart mit der Platte 16 der Trägerstruktur 14 verschraubt, dass sich der Federkorb 28 von einer Oberfläche der Trägerstrukturplatte 16 erstreckt, die im an dem Gepäckfach 12 montierten Zustand des Schnittstellenelements 10 dem Gepäckfach 12 zugewandt ist.

In dem Federkorb 28 ist eine in Form einer Spiralfeder ausgebildete Feder 40 angeordnet. Ein erstes Ende der Feder 40 stützt sich an der Stützeinrichtung 30 des Federkorbs 28 ab. Das zum Zusammenwirken mit der ersten Lagereinrichtung 24 vorgesehene erste Anschlusselement 26 ist im Wesentlichen rohrförmig ausgebildet und im an dem Gepäckfach 12 montierten Zustand des Schnittstellenelements 10 mit einem gepäckfachseitigen ersten Abschnitt des Luftversorgungssystems verbunden. An dem ersten Anschlusselement 26 ist ein radial nach außen ragender Flansch 42 ausgebildet, der auf der in dem Federkorb 28 angeordneten Feder 40 aufliegt, d.h. von einem zweiten Ende der in dem Federkorb 28 aufgenommenen Feder 40 abgestützt wird.

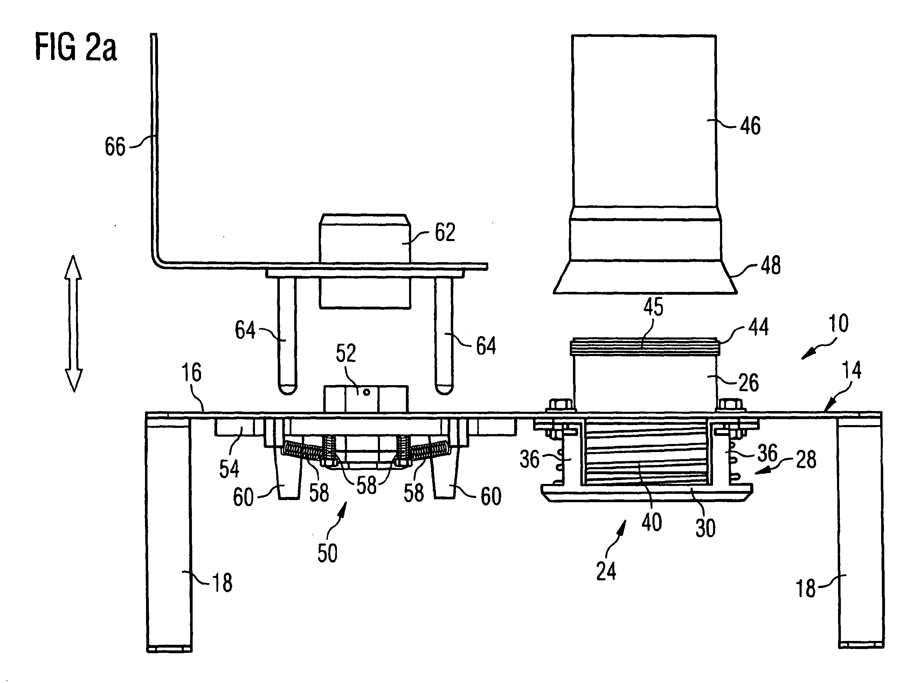

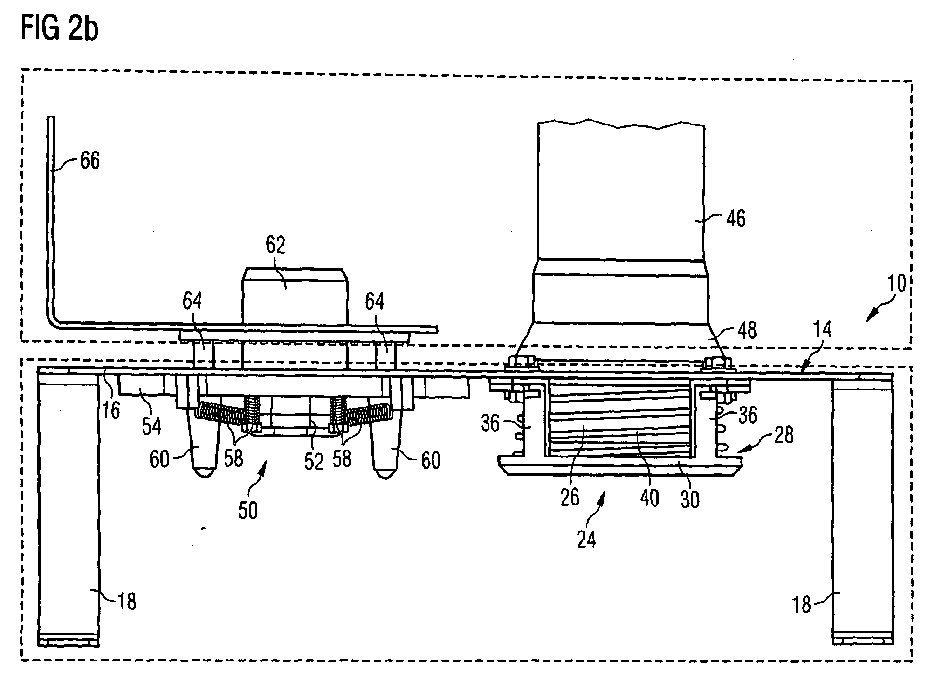

Wie insbesondere in Figur 2b zu erkennen ist, erstreckt sich das erste Anschlusselement 26 durch die in der Trägerstrukturplatte 16 ausgebildete erste Aussparung 20, wobei ein Innendurchmesser der ersten Aussparung 20 größer ist als ein Außendurchmesser des ersten Anschlusselements 26. Das erste Anschlusselement 26 ist somit in alle drei Raumrichtungen beweglich auf der Trägerstruktur 14 gelagert.

Das erste Anschlusselement 26 weist einen im Wesentlichen kreiszylindrisch geformten oberen Rand 44 auf. Alternativ dazu könnte der obere Rand 44 des ersten Anschlusselements 26 auch eine konisch nach innen geneigte Form aufweisen. Bei der Verbindung des ersten Anschlusselements 26 mit einem Teil 46 eines flugzeugseitigen zweiten Abschnitts des Luftversorgungssystems wirkt der obere Rand 44 des ersten Anschlusselements 26 mit einem konisch geformten Abschnitt 48 des Teils 46 des zweiten Flugzeugluftversorgungssystemabschnitts zusammen. Der obere Rand 44 des ersten Anschlusselements 26 und der konisch geformte Abschnitt 48 des Teils 46 des zweiten Flugzeugluftversorgungssystemabschnitts bilden somit zueinander komplementäre Positioniereinrichtungen.

Darüber hinaus umfasst das erste Anschlusselement 26 eine im Bereich des oberen Rands 44 des ersten Anschlusselements 26 angeordnete Dichtung 45. Die Dichtung 45 sorgt für eine abdichtende Verbindung zwischen dem ersten Anschlusselement 26 und dem Teil 46 des flugzeugseitigen zweiten Abschnitts des Luftversorgungssystems.

Das Schnittstellenelement 10 umfasst ferner eine zweite Lagereinrichtung 50, die dazu dient, ein zweites Anschlusselement 52 in alle drei Raumrichtungen beweglich auf der Trägerstruktur 14 zu lagern. Das zweite Anschlusselement 52 ist als kombiniertes elektrisches Anschlusselement und Sauerstoffversorgungssystemanschlusselement ausgebildet und folglich im an dem Gepäckfach 12 montierten Zustand des Schnittstellenelements 10 sowohl mit einem gepäckfachseitigen ersten Abschnitt eines elektrischen Versorgungssystems als auch einem gepäckfachseitigen ersten Abschnitt eines Sauerstoffversorgungssystems verbunden.

Wie insbesondere in Figur 4 zu erkennen ist, umfasst die zweite Lagereinrichtung 50 ein Gehäuse 54, das, ähnlich wie der Federkorb 28 der ersten Lagereinrichtung 24, an einer Oberfläche der Trägerstrukturplatte 16 befestigt ist, die im an dem Gepäckfach 12 montierten Zustand des Schnittstellenelements 10 dem Gepäckfach 12 zugewandt ist. Ferner umfasst die zweite Lagereinrichtung 50 eine in dem Gehäuse 54 angeordnete und das zweite Anschlusselement 52 tragende Halterung 56. Durch eine Mehrzahl von Federn 58, deren erste Enden mit dem Gehäuse 54 und deren zweite Enden mit der Halterung 56 verbunden sind, ist die Halterung 56 und somit das von der Halterung 56 getragene zweite Anschlusselement 52 in alle drei Raumrichtungen beweglich in dem Gehäuse 54 gelagert. Statt der Federn 58 kann die zweite Lagereinrichtung 50 auch ein in dem Gehäuse 54 aufgenommenes Elastomerelement umfassen, das die in alle drei Raumrichtungen bewegliche Lagerung der Halterung 56 und somit des zweiten Anschlusselements 52 in dem Gehäuse 54 ermöglicht.

Die das zweite Anschlusselement 52 tragende Halterung 56 umfasst ferner zwei hohlkegelförmige Aufnahmeeinrichtungen 60. Die Aufnahmeeinrichtungen 60 dienen dazu, bei der Verbindung des zweiten Anschlusselements 52 mit einem Teil 62 eines flugzeugseitigen zweiten Abschnitts des elektrischen Versorgungssystems und des Sauerstoffversorgungssystems mit an dem Teil 62 des zweiten Abschnitts des elektrischen Versorgungssystems und des Sauerstoffversorgungssystems ausgebildeten Vorsprüngen 64 zusammenzuwirken. Die an der Halterung 56 der zweiten Lagereinrichtung 50 ausgebildeten Aufnahmeeinrichtungen 60 und die an dem Teil 62 des flugzeugseitigen zweiten Abschnitts des elektrischen Versorgungssystems und des Sauerstoffversorgungssystems ausgebildeten Vorsprünge dienen somit als zueinander komplementäre Positioniereinrichtungen.

Bei der Montage des Gepäckfachs 12 in einem Flugzeug wird das Gepäckfach 12 mittels geeigneter Befestigungsmittel an der Flugzeugstruktur befestigt. Gleichzeitig, d.h. im gleichen Arbeitsschritt wird mittels des Schnittstellenelements 10 eine Plug & Play-Verbindung zwischen den gepäckfachseitigen ersten Abschnitten des Luftversorgungssystems, des elektrischen Versorgungssystems und des Sauerstoffversorgungssystems und den flugzeugseitigen zweiten Abschnitten dieser Flugzeugversorgungssysteme hergestellt. Zu diesem Zweck wird das an dem Gepäckfach 12 befestigte Schnittstellenelement 10 an die mit dem ersten Anschlusselement 26 und dem zweiten Anschlusselement 52 zu verbindenden Teile 46, 62 des zweiten Abschnitts des Luftversorgungssystems, des elektrischen Versorgungssystems sowie des Sauerstoffversorgungssystems des Flugzeugs angenähert.

Sobald der als Positioniereinrichtung wirkende obere Rand 44 des ersten Anschlusselements 26 mit dem konischen Abschnitt 48 des Teils 46 des zweiten Luftversorgungssystemabschnitts in Kontakt gerät, erfolgt aufgrund der in alle drei Raumrichtungen beweglichen Lagerung des ersten Anschlusselements 26 auf der Trägerstruktur 14 eine Selbstzentrierung des ersten Anschlusselements 26 relativ zu dem Teil 46 des zweiten Luftversorgungssystemabschnitts.

In ähnlicher Weise wirken die an der Halterung 56 der zweiten Lagereinrichtung 50 ausgebildeten Aufnahmeeinrichtungen 60 mit den Vorsprüngen 64 zusammen, die an dem Teil 62 des zweiten Abschnitts des elektrischen Versorgungssystems sowie des Sauerstoffversorgungssystems ausgebildet sind. Aufgrund der in alle drei Raumrichtungen beweglichen Lagerung der Halterung 56 und somit des zweiten Anschlusselements 52 in dem Gehäuse 54 erfolgt eine Selbstzentrierung des zweiten Anschlusselements 52 relativ zu dem fest mit einem Strukturhalter 66 verbundenen Teil 62 des zweiten Abschnitts des elektrischen Versorgungssystems sowie des Sauerstoffversorgungssystems, bis eine Verbindung zwischen dem zweiten Anschlusselement 52 und dem Teil 62 des zweiten Abschnitts des elektrischen Versorgungssystems wie des Sauerstoffversorgungssystems hergestellt ist.

## Patentansprüche

1. Schnittstellenelement (10) zur Verbindung von an einem Flugzeuginnenausstattungsbauteil (12) vorgesehenen ersten Abschnitten einer Mehrzahl von Flugzeugversorgungssystemen mit entsprechenden zweiten Abschnitten der Flugzeugversorgungssysteme, welches umfasst:
- eine an dem Flugzeuginnenausstattungsbauteil (12) befestigbare Trägerstruktur (14), die eine Platte (16) sowie die Platte (16) tragende Füße (18) umfasst, wobei die Platte (16) mit einer Mehrzahl von Aussparungen (20, 22) versehen ist, und wobei die die Platte (16) tragenden Füße (18) dazu eingerichtet sind, die Trägerstruktur (14) derart an dem Flugzeuginnenausstattungsbauteil (12) zu befestigen, dass die Platte (16) in einem Abstand von dem Flugzeuginnenausstattungsbauteil (12) angeordnet ist, und
- eine Mehrzahl von Anschlusselementen (26, 52), die jeweils mit einem an dem Flugzeuginnenausstattungsbauteil (12) vorgesehenen ersten Abschnitt eines Flugzeugversorgungssystems verbindbar und jeweils über eine an der Platte (16) der Trägerstruktur (14) befestigte Lagereinrichtung (24, 50) derart auf der Trägerstruktur (14) gelagert sind, dass jedes Anschlusselement (26, 52) eine in der Platte (16) der Trägerstruktur (14) ausgebildete Aussparung (20, 22) durchsetzt, wobei jede Lagereinrichtung (24, 50) mindestens ein elastisches Lagerelement umfasst, das eine in alle drei Raumrichtungen bewegliche Lagerung des ihr zugeordneten Anschlusselements (26, 52) ermöglicht.

2. Schnittstellenelement nach Anspruch 1,
**dadurch gekennzeichnet, dass** die Anschlusselemente (26, 52) ein Luftversorgungssystemanschlusselement, ein elektrisches Anschlusselement, ein Wasserversorgungssystemanschlusselement und/oder ein Sauerstoffversorgungssystemanschlusselement umfassen.

3. Schnittstellenelement nach Anspruch 1 oder 2,
**dadurch gekennzeichnet, dass** an einem Anschlusselement (26, 52) und/oder an einer Lagereinrichtung (24, 50) eine Positioniereinrichtung und/oder eine Dichtung (44, 60) ausgebildet ist, die dazu eingerichtet ist/sind, beim Verbinden eines ersten Abschnitts eines Flugzeugversorgungssystems mit einem zweiten Abschnitt des Flugzeugversorgungssystems mit einer an dem zweiten Abschnitt des Flugzeugversorgungssystems vorgesehenen komplementären Einrichtung (48, 64) zusammenzuwirken.

4. Schnittstellenelement nach einem der Ansprüche 1 bis 3,
**dadurch gekennzeichnet, dass** an einem Anschlusselement (26) eine Verbindungseinrichtung zur Verbindung des Anschlusselements (26) mit einem zweiten Abschnitt eines Flugzeugversorgungssystems vorgesehen ist.

5. Schnittstellenelement nach einem der Ansprüche 1 bis 4,
**dadurch gekennzeichnet, dass** eine Lagereinrichtung (24) einen Federkorb (28) sowie eine in dem Federkorb (28) angeordnete Feder (40) umfasst und dass an einem Anschlusselement (26) ein radial nach außen ragender Flansch (42) ausgebildet ist, der auf der in dem Federkorb (28) angeordneten Feder (40) aufliegt.

6. Schnittstellenelement nach einem der Ansprüche 1 bis 5,
**dadurch gekennzeichnet, dass** eine Lagereinrichtung (50) ein Gehäuse (54) sowie eine in dem Gehäuse (54) angeordnete und ein Anschlusselement (52) tragende Halterung (56) umfasst, wobei die Halterung (56) durch das elastische Lagerelement in alle drei Raumrichtungen beweglich in dem Gehäuse (54) gelagert ist.

7. Schnittstellenelement nach Anspruch 6,
**dadurch gekennzeichnet, dass** das elastische Lagerelement ein in dem Gehäuse (54) angeordnetes Elastomerelement und/oder eine Mehrzahl von Federn (58) umfasst, deren erste Enden mit dem Gehäuse (54) und deren zweite Enden mit der das Anschlusselement (52) tragenden Halterung (56) verbunden sind.

8. Schnittstellenelement nach Anspruch 6 oder 7,
**dadurch gekennzeichnet, dass** die das Anschlusselement (52) tragende Halterung (56) mindestens eine Aufnahmeeinrichtung (60) zur Aufnahme eines an dem zweiten Abschnitt des Flugzeugversorgungssystems ausgebildeten Vorsprungs (64) umfasst, wobei die Aufnahmeeinrichtung (60) und/oder der Vorsprung (64) konisch ausgebildet ist/sind.

9. Flugzeuginnenausstattungsbauteil (12) mit einem Schnittstellenelement (10) nach einem der Ansprüche 1 bis 8.

10. Verfahren zur Montage eines Flugzeuginnenausstattungsbauteils (12) in einem Flugzeug mit den Schritten:
- Bereitstellen eines Flugzeuginnenausstattungsbauteils (12) nach Anspruch 9,
- Befestigen des Flugzeuginnenausstattungsbauteils (12) an einer Flugzeugstruktur und
- Verbinden von an dem Flugzeuginnenausstattungsbauteil (12) vorgesehenen ersten Abschnitten einer Mehrzahl von Flugzeugversorgungssystemen mit entsprechenden zweiten Abschnitten der Flugzeugversorgungssysteme durch Verbinden der Anschlusselemente (26, 52) des Schnittstellenelements (10) mit den zweiten Abschnitten der Flugzeugversorgungssysteme.

11. Verfahren nach Anspruch 10,
**dadurch gekennzeichnet, dass** beim Verbinden eines Anschlusselements (26, 52) des Schnittstellenelements (10) mit einem zweiten Abschnitt eines Flugzeugversorgungssystems eine an dem Anschlusselement (26, 52) und/oder an einer Lagereinrichtung (24, 50) ausgebildete Positioniereinrichtung (44, 60) mit einer an dem zweiten Abschnitt des Flugzeugversorgungssystems vorgesehenen komplementären Positioniereinrichtung (48, 64) zusammenwirkt.

12. Verfahren nach Anspruch 10 oder 11,
**dadurch gekennzeichnet, dass** ein Anschlusselement (26) mittels einer an dem Anschlusselement (26) vorgesehenen Verbindungseinrichtung mit einem zweiten Abschnitt eines Flugzeugversorgungssystems verbunden wird.

## Claims

1. An interface element (10) for connecting first sections of a plurality of aircraft supply systems, which are provided on an aircraft interior equipment component (12), to corresponding second sections of the aircraft supply systems, which includes:
- a carrier structure (14) which is fastenable to the aircraft interior equipment component (12) and includes a plate (16) and feet (18) which carry the plate (16), the plate (16) being provided with a plurality of cutouts (20, 22), and the feet (18) that carry the plate (16) being set up to secure the carrier structure (14) on the aircraft interior equipment component (12) such that the plate (16) is arranged at a distance from the aircraft interior equipment component (12), and
- a plurality of connector elements (26, 52) each of which is connectable to a first section of an aircraft supply system provided on the aircraft interior equipment component (12) and each of which is mounted on the carrier structure (14) by way of a bearing means (24, 50) which is secured to the plate (16) of the carrier structure (14) such that each connector element (26, 52) passes through a cutout (20, 22) constructed in the plate (16) of the carrier structure (14), each bearing means (24, 50) including at least one resilient bearing element which enables the connector element (26, 52) associated therewith to be mounted such that it is movable in all three spatial directions.

2. An interface element according to Claim 1,
**characterised in that** the connector elements (26, 52) include an air supply system connector element, an electrical connector element, a water supply system connector element and/or an oxygen supply system connector element.

3. An interface element according to Claim 1 or 2,
**characterised in that** a positioning means and/or a seal (44, 60), which is/are set up to cooperate with a complementary means (48, 64), provided on the second section of the aircraft supply system, when a first section of the aircraft supply system is connected to a second section of the aircraft supply system, is/are constructed on a connector element (26, 52) and/or on a bearing means (24, 50).

4. An interface element according to one of Claims 1 to 3,
**characterised in that** a connection means for connecting the connector element (26) to a second section of an aircraft supply system is provided on a connector element (26).

5. An interface element according to one of Claims 1 to 4,
**characterised in that** a bearing means (24) includes a spring cage (28) and a spring (40) that is arranged in the spring cage (28), and **in that** a radially outwardly projecting flange (42) which lies on the spring (40) arranged in the spring cage (28) is constructed on a connector element (26).

6. An interface element according to one of Claims 1 to 5,
**characterised in that** a bearing means (50) includes a housing (54) and, arranged in the housing (54) and carrying a connector element (52), a mounting (56), the mounting (56) being mounted in the housing (54) by the resilient bearing element such that it is movable in all three spatial directions.

7. An interface element according to Claim 6,
**characterised in that** the resilient bearing element includes an elastomer element arranged in the housing (54) and/or a plurality of springs (58) whereof the first ends are connected to the housing (54) and whereof the second ends are connected to the mounting (56) carrying the connector element (52).

8. An interface element according to Claim 6 or 7,
**characterised in that** the mounting (56) that carries the connector element (52) includes at least one receiving means (60) for receiving a projection (64) constructed on the second section of the aircraft supply system, the receiving means (60) and/or the projection (64) being constructed to be conical.

9. An aircraft interior equipment component (12) having an interface element (10) according to one of Claims 1 to 8.

10. A method for installing an aircraft interior equipment component (12) in an aircraft, having the steps of:
- providing an aircraft interior equipment component (12) according to Claim 9,
- securing the aircraft interior equipment component (12) to an aircraft structure and
- connecting first sections of a plurality of aircraft supply systems, provided on the aircraft interior equipment component (12), to corresponding second sections of the aircraft supply systems by connecting the connector elements (26, 52) of the interface element (10) to the second sections of the aircraft supply systems.

11. A method according to Claim 10,
**characterised in that** when a connector element (26, 52) of the interface element (10) is connected to a second section of an aircraft supply system, a positioning means (44, 60), which is constructed on the connector element (26, 52) and/or on a bearing means (24, 50), cooperates with a complementary positioning means (48, 64) provided on the second section of the aircraft supply system.

12. A method according to Claim 10 or 11,
**characterised in that** a connector element (26) is connected to a second section of an aircraft supply system by means of a connection means provided on the connector element (26).

## Revendications

1. Elément interface (10) permettant l'assemblage de premiers segments d'une multitude de systèmes d'approvisionnement d'avion prévus sur un élément d'équipement intérieur d'avion (12) à des seconds segments correspondants des systèmes d'approvisionnement d'avion, lequel élément interface comprend :
- une structure porteuse (14) qui peut être fixée à l'élément d'équipement intérieur d'avion (12) et comprend une plaque (16) ainsi que des pieds (18) supportant ladite plaque (16), la plaque (16) étant pourvue d'une multitude d'évidements (20, 22) et lesdits pieds supportant (18) la plaque (16) étant aménagés pour fixer ladite structure porteuse (14) à l'élément d'équipement intérieur d'avion (12) de telle sorte que la plaque (16) est disposée à distance de l'élément d'équipement intérieur d'avion (12), et
- une multitude d'éléments de raccordement (26, 52) qui peuvent être respectivement assemblés à un premier segment d'un système d'approvisionnement d'avion prévu sur l'élément d'équipement intérieur d'avion (12) et sont respectivement montés sur un dispositif de palier (24, 50) fixé à la plaque (16) de la structure porteuse (14) de telle sorte que chacun des éléments de raccordement (26, 52) traverse un évidement (20, 22) réalisé dans la plaque (16) de la structure porteuse (14), chacun des dispositifs de palier (24, 50) comprenant au moins un élément de palier élastique pour permettre le déplacement dans toutes les trois directions spatiales de l'élément de raccordement (26, 52) qui lui est associé.

2. Elément interface selon la revendication 1,
**caractérisé en ce que** les éléments de raccordement (26, 52) comprennent un élément de raccordement de système d'approvisionnement en air, un élément de raccordement électrique, un élément de raccordement d'approvisionnement en eau et/ou un élément de raccordement de système d'approvisionnement en oxygène.

3. Elément interface selon la revendication 1 ou 2,
**caractérisé en ce qu'**un dispositif de positionnement et/ou un joint (44, 60) est réalisé sur un élément de raccordement (26, 52) et/ou sur un dispositif de palier (24, 50), lequel/lesquels est/sont conçu(s) pour coopérer avec un dispositif complémentaire (48, 64) prévu sur le second segment du système d'approvisionnement d'avion lorsqu'un premier segment d'un système d'approvisionnement d'avion est assemblé à un second segment du système d'approvisionnement d'avion.

4. Elément interface selon l'une des revendications 1 à 3,
**caractérisé en ce qu'**un dispositif d'assemblage est prévu sur un élément de raccordement (26) pour permettre l'assemblage de l'élément de raccordement (26) à un second segment d'un système d'approvisionnement d'avion.

5. Elément interface selon l'une des revendications 1 à 4,
**caractérisé en ce qu'**un dispositif de palier (24) comprend une cage à ressort (28) et un ressort (40) placé dans ladite cage à ressort (28) et **en ce qu'**une bride (42) faisant radialement saillie vers l'extérieur est réalisée sur un élément de raccordement (26), laquelle bride repose sur le ressort (40) placé dans la cage à ressort (28).

6. Elément interface selon l'une des revendications 1 à 5,
**caractérisé en ce qu'**un dispositif de palier (50) comprend un boîtier (54) ainsi qu'un dispositif de maintien (56) placé dans ledit boîtier (54) et supportant un élément de raccordement (52), ledit dispositif de maintien (56) étant monté dans le boîtier (54) de manière à pouvoir se déplacer dans toutes les trois directions spatiales à l'aide de l'élément de palier élastique.

7. Elément interface selon la revendication 6,
**caractérisé en ce que** l'élément de palier élastique comprend un élément élastomère placé dans le boîtier (54) et/ou une multitude de ressorts (58), dont les premières extrémités sont reliées au boîtier (54), et les secondes extrémités, au dispositif de maintien (56) supportant l'élément de raccordement (52).

8. Elément interface selon la revendication 6 ou 7,
**caractérisé en ce que** le dispositif de maintien (56) supportant l'élément de raccordement (52) comprend au moins un dispositif de logement (60) destiné à recevoir une saillie (64) réalisée sur le second segment du système d'approvisionnement d'avion, ledit dispositif de logement (60) et/ou ladite saillie (64) étant réalisé(s) sous forme conique.

9. Elément d'équipement intérieur d'avion (12) pourvu d'un élément interface (10) selon l'une des revendications 1 à 8.

10. Procédé permettant le montage dans un avion d'un élément d'équipement intérieur d'avion (12), comprenant les étapes suivantes :
- la mise à disposition d'un élément d'équipement intérieur d'avion (12) selon la revendication 9,
- la fixation de l'élément d'équipement intérieur d'avion (12) sur une structure d'avion et
- l'assemblage de premiers segments d'une multitude de systèmes d'approvisionnement d'avion prévus sur un élément d'équipement intérieur d'avion (12) à des seconds segments correspondants des systèmes d'approvisionnement d'avion par l'assemblage des éléments de raccordement (26, 52) de l'élément interface (10) aux seconds segments des systèmes d'approvisionnement d'avion.

11. Procédé selon la revendication 10,
**caractérisé en ce qu'**un dispositif de positionnement (44, 60) réalisé sur l'élément de raccordement (26, 52) et/ou sur un dispositif de palier (24, 50) coopère avec un dispositif de positionnement complémentaire (48, 64) prévu sur le second segment du système d'approvisionnement d'avion lorsqu'un élément de raccordement (46, 52) de l'élément interface (10) est assemblé à un second segment d'un système d'approvisionnement d'avion.

12. Procédé selon les revendications 10 ou 11,
**caractérisé en ce qu'**un élément de raccordement (26) est assemblé à un second segment d'un système d'approvisionnement d'avion au moyen d'un dispositif d'assemblage prévu sur l'élément de raccordement (26).
